# EUROPÄISCHE PATENTSCHRIFT

(11) **EP 2 153 215 B1**
(45) Veröffentlichungstag und Bekanntmachung des Hinweises auf die Patenterteilung: **01.08.2018**
(21) Anmeldenummer: 08733785.3
(22) Anmeldetag: 08.04.2008
(51) Int. Cl.: G01N 23/04, G01N 23/00

(54) **VORRICHTUNG UND VERFAHREN ZUR ZERSTÖRUNGSFREIEN PRÜFUNG VON GEGENSTÄNDEN**
DEVICE AND METHOD FOR THE NON-DESTRUCTIVE TESTING OF OBJECTS
DISPOSITIF ET PROCÉDÉ DE CONTRÔLE NON DESTRUCTIF D'OBJETS

(30) Priorität: 07.06.2007 WO PCT/CH2007/000286; 26.09.2007 WO PCT/CH2007/000476
(43) Veröffentlichungstag der Anmeldung: 17.02.2010
(73) Patentinhaber: Hafner, Georg, 8006 Zürich (CH)
(72) Erfinder: COCHRANE, David, Robb, B-2960 Sint Job int Goor (BE)
(74) Vertreter: Frei Patent Attorneys
(86) Internationale Anmeldenummer: PCT/CH2008/000157
(87) Internationale Veröffentlichungsnummer: WO 2008/148228

(56) Entgegenhaltungen:
- GB-A- 1 219 837
- JP-A- 9 089 810
- JP-A- 2001 074 672
- JP-A- 2004 125 450
- JP-A- 2004 177 230
- JP-A- 2004 333 409
- US-A- 2 965 761
- US-A1- 2004 016 886
- "New radiography system overcomes problems caused by scaffolding", Insight, vol. 48, no. 5 31 May 2006 (2006-05-31), Retrieved from the Internet: URL:http://www.value-5.ch/pdf/value5_insig ht.pdf [retrieved on 2017-01-26]

## Beschreibung

Die Erfindung bezieht sich auf das Gebiet der zerstörungsfreien Prüfung, insbesondere von Leitungen von Industrieanlagen wie Ölraffinerien, in der chemischen Industrie, Prozessindustrie, etc. Sie bezieht sich auf eine Vorrichtung und ein Verfahren zur zerstörungsfreien Prüfung von Gegenständen gemäss dem Oberbegriff der entsprechenden unabhängigen Patentansprüche.

### STAND DER TECHNIK

Bei der Prüfung von Rohren in Ölraffinieren werden gegenwärtig, um Röntgenaufnahmen der Rohre zu machen, Gerüste aufgestellt. Von den Gerüsten aus werden Filmplatten und Röntgenstrahlquellen am Rohr oder am Gerüst festgebunden. Beim Auslösen einer Aufnahme muss das Bedienpersonal in der Regel das Gerüst verlassen. Das Verfahren ist zeitaufwendig und bedingt das Stilllegen der Anlage, mit entsprechenden hohen Folgekosten. Analoges gilt für die Prüfung von Rohren und Behältern in anderen Industriezweigen.

JP 09-089810 zeigt ein Gerät zur Inspektion von Rohren. Das Gerät weist einen motorisch angetriebenen Gelenkarm oder Manipulator auf, welcher einerseits einen Kollimator zur Aufnahme einer Strahlungsquelle und andererseits eine kippbare Halteplatte für einen Röntgenfilm. Zum Erstellen einer Aufnahme wird der Gelenkarm unter ein Rohr gefahren, die Röntgenplatte hinter dem Rohr hochgestellt und die Strahlungsquelle in den Kollimator transportiert. Die Vorrichtung ist maschinell aufwendig und nur beschränkt einsetzbar.

Vorrichtungen zum Transportieren einer Strahlungsquelle aus einem Behälter in einen Kollimator und zurück sind beispielsweise in GB 2 251 047 und US 2,965,761 beschrieben.

Der Artikel "New radiography system overcomes problems caused by scaffolding", Insight, Bd. 48, Nr. 5 31. Mai 2006 (2006-05-31), beschreibt eine Vorrichtung gemäss dem Oberbegriff von Patentanspruch 1.

JP 2004 125450 A zeigt eine radiographische Vorrichtung mit einem Halteelement, welches einen rohrförmigen Prüfgegenstand bezüglich eines Bildrezeptors fixiert.

### DARSTELLUNG DER ERFINDUNG

Es ist deshalb Aufgabe der Erfindung, eine Vorrichtung und ein Verfahren zur zerstörungsfreien Prüfung von Gegenständen der eingangs genannten Art zu schaffen, welche die oben genannten Nachteile behebt.

Diese Aufgabe lösen eine Vorrichtung und ein Verfahren zur zerstörungsfreien Prüfung von Gegenständen mit den Merkmalen der entsprechenden unabhängigen Patentansprüche.

Die Vorrichtung zur zerstörungsfreien Prüfung von Gegenständen weist ein erstes Positionierungsmittel zur Positionierung eines Kollimators zur Aufnahme einer Strahlungsquelle bei einem zu prüfenden Gegenstand (d.h. gegen den Gegenstand oder in unmittelbarer Nähe des Gegenstandes) auf, sowie ein zweites Positionierungsmittel zur Positionierung eines Aufzeichnungsträgers beim zu prüfenden Gegenstand. Das erste Positionierungsmittel ist mit einem unteren Ende auf einer Auflagefläche verankerbar oder aufstellbar, wobei der Kollimator am gegenüberliegenden, oberen Ende des ersten Positionierungsmittels angebracht ist.

Damit wird es möglich, Aufnahmen von zu prüfenden Rohren zu erstellen, ohne dass Gerüste auf- und abgebaut werden müssen. Ferner können auch Aufnahmen in kleinen Räumen, in Schächten oder an unzugänglichen Stellen gemacht werden Vorzugsweise ist die Strahlungsquelle eine radioaktive Strahlungsquelle, vorzugsweise ein Körper, welcher ein radioaktives Material enthält. Mit einem auf radioaktive Strahlung sensitiven Aufzeichnungsmittel im Aufzeichnungsträger können somit Röntgenaufnahmen von zu prüfenden Gegenständen gemacht werden.

In einer bevorzugten Ausführungsform der Erfindung ist die Strahlungsquelle über einen Zuführschlauch zum Kollimator führbar und daraus entfernbar, vorzugsweise durch einen Seilzug. Dabei ist die Strahlungsquelle, wenn sie sich nicht im Kollimator befindet, in einen abgeschirmten Isotopenbehälter oder Aufbewahrungsbehälter gelagert wobei der Aufbewahrungsbehälter vom Kollimator entfernt angeordnet ist.. Die äussere Verkleidung der Strahlungsquelle hat die Form einer in etwa zylindrischen Pille oder Kapsel. Der Zuführschlauch ist vorzugsweise am ersten Positionierungsmittel fixiert, kann aber auch mittels einer separaten Stange geführt und gehalten werden. Eine pneumatische Förderung der Strahlungsquelle durch Einblasen von Luft durch den Zuführschlauch ist auch möglich, wird aber aus Sicherheitsgründen nicht bevorzugt.

Die Erfindung ist nicht auf die Verwendung eines Kabelzuges eingeschränkt. Sie kann in weiteren bevorzugten Ausführungsformen der Erfindung auch andere Mittel zum Transportieren einer Strahlungsquelle an einen vorgegebenen Ort, oder Mittel zum Aktivieren einer Strahlungsquelle, welche sich beispielsweise abgeschirmt an einem vorgegebenen Ort befindet, aufweisen.

Vorzugsweise sind die Teile der Vorrichtung, insbesondere alle äusserlichen oder berührbaren Teile aus nicht funken erzeugenden Materialien gefertigt, insbesondere aus Messing, Aluminium und/oder Kunststoff. Dies betrifft vor allem tragende Rohre und Stangen der beiden Positioniervorrichtungen, schliesst aber auch Muttern, Schrauben oder Bolzen zur Verbindung und Arretierung der Stangen, sowie weitere Kleinteile ein. Solche Kleinteile können auch aus Stahl und dafür ganz oder teilweise mit einem anderen, nicht funkenerzeugendem Material wie Kunststoff oder Gummi verkleidet sein. Wenn das Gestell auf Rädern montiert ist, so werden vorzugsweise antistatische, d.h. leitende Radmaterialien verwendet. Damit ist die Arbeit in explosionsgefährdeten Umgebungen möglich.

Vorzugsweise beträgt die Länge des ersten Positionierungsmittels und des zweiten Positionierungsmittels mehr als anderthalb oder zwei Meter, beispielsweise bis zu sechs oder bis zu neun Metern. Diese Länge ist der Abstand zwischen dem Boden, auf welchem das erste Positionierungsmittel ruht, und dem Kollimator, und analog der Abstand zwischen einem Fuss des zweiten Positionierungsmittels und des Aufzeichnungsträgers. Damit ist auch die Länge des Zuführschlauches mindestens 2 bis 5 oder mehr Meter, d.h. entsprechend um ein bis beispielsweise fünf Meter länger, da der Zuführschlauch aus praktischen Gründen vom Fuss des ersten Positionierungsmittels entfernt sein muss.

Das **zweite Positionierungsmittel** weist ein Halterohr zur Positionierung des Aufzeichnungsträgers bezüglich des Prüfgegenstands, wobei das zweite Positionierungsmittel durch eine lösbare Verbindung an verschiedenen Stellen des Aufzeichnungsträgers befestigbar ist. Die lösbare Verbindung ist beispielsweise eine Klettverbindung zwischen einer Verbindungsplatte des Halterohres und dem Aufzeichnungsträger. Damit wird es möglich, Aufzeichnungsträger gegen den Prüfgegenstand zu lehnen oder zu drücken, ohne dass der Aufzeichnungsträger wegkippt. Dazu wird die Verbindungsstelle zwischen dem Halterohr und dem Aufzeichnungsträger auf der Fläche des Aufzeichnungsträgers so gewählt, dass der Aufzeichnungsträger in der gewünschten Position stabil gegen den Prüfgegenstand liegt.

Anstelle der Klettverbindung kann grundsätzlich auch eine andere Art der Verbindung gewählt werden, welche eine im wesentliche freie Positionierung der Verbindungsplatte auf dem Aufzeichnungsträger erlaubt: beispielsweise
- mittels Magneten;
- mittels einer am Aufzeichnungsträger befestigten Platte mit einem Lochraster, auf welche Platte die Verbindungsplatte an verschiedenen Stellen angeschraubt werden kann;
- mittels einer Reihe von elastischen Gummiseilen, welche die Hinterseite des Aufzeichnungsträgers überspannen, und unter welche die Verbindungsplatte an verschiedenen Stellen geschoben werden kann.

Die Klettverbindung hat aber den Vorteil, dass sie leicht ist, der Aufzeichnungsträger rundum an allen Seiten damit abgedeckt werden kann und dadurch auch als Polsterung wirkt, und dass damit auch Führungskörper befestigbar sind.

Das erste Positionierungsmittel ist vorzugsweise vom zweiten Positionierungsmittel getrennt bewegbar und unabhängig positionierbar. Ferner ist der Aufzeichnungsträger bezüglich des Halterohrs des zweiten Positionierungsmittels um eine Achse senkrecht zur Achse des Halterohrs drehbar. Dadurch kann sich der Aufzeichnungsträger beim Anlehnen gegen den Prüfgegenstand in eine noch stabilere Lage drehen. Je nach der Geometrie des Prüfgegenstandes ist diese Lage beispielsweise parallel zu einer Fläche oder einem Rohr oder einer Ebene eines Rohres.

In einer weiteren bevorzugten Ausführungsform der Erfindung weist der Aufzeichnungsträger Führungskörper zum Abstützen und Führen des Aufzeichnungsträgers am Prüfgegenstand auf. Dabei sind die Führungskörper verstellbar an der vom Halterohr abgewandten Seite (also auf der dem Prüfgegenstand zuzuwendenden Seite) des Aufzeichnungsträgers befestigbar. Die Führungskörper sind vorzugsweise durch Klettverbindungen verstellbar am Aufzeichnungsträger befestigbar. Damit kann die Lage des Aufzeichnungsträgers bezüglich des Prüfgegenstands definiert werden, indem die Führungskörper vor dem Positionieren des Aufzeichungsträgers entsprechend der gewünschten Lage am Prüfgegenstand auf dem Aufzeichnungsträger plaziert werden.

Im **Verfahren** zur Verwendung der genannten Vorrichtung werden die folgenden Schritte ausgeführt:
- Aufstellen des ersten Positionierungsmittels mit dem Kollimator an einer Seite des Prüfgegenstands;
- Aufstellen des zweiten Positionierungsmittels mit dem Aufzeichnungsträger an einer dem Kollimator gegenüberliegenden Seite des Prüfgegenstands;
- Auslösen einer Aufzeichnung durch Aktivieren der Strahlungsquelle.

Dabei weist vorzugsweise der Schritt des Auslösens einer Aufzeichnung die folgenden Schritte auf:
- Transportieren der radioaktiven Strahlungsquelle mittels eines Zuführschlauches zum Kollimator;
- Zurücktransportieren der Strahlungsquelle aus dem Kollimator mittels des Zuführschlauches zu einem abgeschirmten Behälter.

Der Schritt des Aufstellens des **ersten** Positionierungsmittels weist vorzugsweise die folgenden Schritte auf:
- Einstellen und Fixieren eines geplanten Abstands zwischen Kollimator und Prüfgegenstand durch Verstellen der mechanischen Führung, optional auch durch Wahl der Positionierung des Kollimators am ersten Positionierungsmittel;
- optional Ausfahren einer Teleskopstange, bis der Kollimator auf der gewünschten Höhe ist; und
- Bewegen des ersten Positionierungsmittels, vorzugsweise von Hand, bis die mechanische Führung in der gewünschten Position am Prüfgegenstand anliegt.

Eine bevorzugte Variante des Verfahrens weist dabei die folgenden Schritte auf:
- Einstellen und Fixieren eines geplanten Winkels zwischen einer Stange und einem Ausleger mit einer mechanischen Führung;
- Ausfahren oder Anheben der Stange, vorzugsweise von Hand, in die Nähe des Prüfgegenstandes; und
- Kippen der Stange, vorzugsweise von Hand, um einen Drehpunkt oder eine Drehachse gegen den Prüfgegenstand, bis die mechanische Führung gegen den Prüfgegenstand liegt.

Das oben genannte Einstellen und Fixieren von Abständen und Winkeln geschieht vorzugsweise manuell. Das Bewegen oder Kippen des ersten Positionierungsmittels geschieht ebenfalls vorzugsweise durch eine oder mehrere Personen, welche ein unteres Ende des ersten Positionierungsmittels halten und bewegen und dadurch die am oberen Ende angeordnete Führung und Kollimator in die gewünschte Messposition bewegen.

Der Schritt des Aufstellens des **zweiten** Positionierungsmittels weist vorzugsweise die folgenden Schritte auf:
- Positionieren der Verbindungsplatte des zweiten Positionierungsmittels auf dem Aufzeichnungsträger in einer frei auf einer ersten Fläche des Aufzeichnungsträgers wählbaren Lage, und Fixieren der Verbindungsplatte durch eine lösbare Verbindung;
- optional: Positionieren von Führungskörpern auf einer zweiten Fläche des Aufzeichnungsträgers;
- Bewegen und Anlehnen des Aufzeichnungsträgers gegen den Prüfgegenstand; optional durch eine Führung, die dadurch bewirkt wird, dass die Führungskörper am Prüfgegenstand anliegen.

Dabei ist die Position der Verbindungsplatte auf dem Aufzeichnungsträger so gewählt, dass dieser nicht am Prüfgegenstand abkippt. Der Aufzeichnungsträger dreht sich vorzugsweise frei um eine Achse bezüglich einer Stange des zweiten Positionierungsmittels, so dass der Aufzeichnungsträger in einer stabilen Lage am Prüfgegenstand anliegt.

Das Bewegen und Anlehnen des zweiten Positionierungsmittels geschieht ebenfalls vorzugsweise durch eine oder mehrere Personen, welche ein erstes, typischerweise unteres Ende des zweiten Positionierungsmittels halten und bewegen und dadurch den am zweiten, typischerweise oberen Ende angeordneten Aufzeichnungsträger in die gewünschte Messposition bewegen.

In einer weiteren Ausführungsform, die zum Verständnis der Erfindung dient, ist der Aufzeichnungsträger flexibel und biegbar, und ist dadurch gegen die Innenwand oder Aussenwand eines Behälters pressbar. Bei diesem Anpressen oder -Drücken verformt sich der Aufzeichnungsträger, passt sich der konkaven oder konvexen Form des Behälters an und liegt an der Wand an. Beim Anpressen an eine Innenseite kann das bereits beschriebene zweite Positionierungsmittel eingesetzt werden.

Beim Befestigen an der Aussenseite eines Behälters werden in einer bevorzugten Ausführungsform der Erfindung Magnete zur Fixierung des Aufzeichnungsträgers verwendet. Die Magnete können separate Teile sein und von aussen gegen den Aufzeichnungsträger gelegt werden, oder die Magnete können fest im Aufzeichnungsträger eingebaut sein. In einer anderen Ausführungsform der Erfindung wird der Aufzeichnungsträger mit mindestens zwei separaten Stangen als Randhalterung gegen die Aussenseite gedrückt.

Ein entsprechendes Verfahren zum Positionieren eines Aufzeichnungsträgers weist also einen der Schritte
- Positionieren und Festhalten des Aufzeichnungsträgers mittels der Magnete an einer Aussenwand eines Behälters oder
- Positionieren und Festhalten des Aufzeichnungsträgers mittels der Randhalterung an einer Aussenwand eines Behälters.
auf.

Der Aufzeichnungsträger kann gemäss einer weiteren Ausführungsform der Erfindung an einer elastisch spreizbaren Gabel als Randhalterung befestigt sein. Die Gabel reicht bis zu den Aussenrändern des Aufzeichnungsträgers und ist am linken und rechten Rand des Aufzeichnungsträgers drehbar befestigt. Der Aufzeichnungsträger ist also biegbar und zwischen den Enden der Gabel angeordnet. Beim Andrücken an einen konvexen Körper schliesst sich die Gabel ein wenig und biegt sich der Aufzeichnungsträger gegen die Gabel durch und liegt so am konvexen Körper an.

Das **erste Positionierungsmittel** weist in einer bevorzugten Ausführungsform der Erfindung eine mechanische Führung zur Zentrierung des Kollimators bezüglich eines Prüfgegenstandes indem die mechanische Führung gegen den Prüfgegenstand gedrückt wird, auf. Diese Führung kann eine sich Y-förmig aufweitende Gabel sein, oder in anderer Weise an die Form des Prüfgegenstandes angepasst sein. Zudem bewirkt die mechanische Führung eine Distanzierung des Kollimators vom Prüfgegenstand, erlaubt also eine exakte Vorgabe des Abstands zwischen dem Kollimator und dem Prüfgegenstand. Damit kann der Abstand durch Verschieben der mechanischen Führung bezüglich eines Objektes, an dem der Kollimator befestigt ist, eingestellt werden.

Diese exakte Distanzierung ist, je nach dem verwendeten Messprinzip, vorteilhaft. Beispielsweise ist bei einer seitlichen Röntgenaufnahme eines Rohres anhand des vorgebbaren Abstands zwischen Kollimator zum Rohr einerseits, und der Tatsache, dass ein Aufzeichnungsträger gegen das Rohr gedrückt wird, die Geometrie der Abbildung oder Projektion auf den Röntgenfilm bekannt. Es kann beispielsweise eine Wanddicke im Röntgenbild gemessen werden, und dank der bekannten Geometrie die tatsächliche Wanddicke des Rohres berechnet werden.

Vorzugsweise sind sowohl der Kollimator als auch die mechanische Führung an einer Stange befestigt sind und ist der Kollimator wahlweise über unter der mechanischen Führung befestigbar. Damit kann die relative Position zwischen Kollimator und Führung an die Geometrie des Prüfgegenstandes angepasst werden.

In einer weiteren bevorzugten Ausführungsform der Erfindung weist das erste Positionierungsmittel eine Stange auf, welche kippbar aufstellbar ist, und dazu um eine Drehachse oder einen Drehpunkt kippbar ist. Vorzugsweise ist dazu die Stange um eine Achse drehbar an einem Gelenkfuss befestigt oder an einem Zweibeinstativ befestigt. Ferner weist das erste Positionierungsmittel ferner ein verstellbares Gelenk zwischen der Stange und einem Ausleger aufweist, wodurch eine am Ausleger befestigte mechanische Führung in einem wählbaren Winkel gegen einen Prüfgegenstand bewegbar und an den Prüfgegenstand anlehnbar ist. Dadurch ist es möglich, die Stange auch in beengten Verhältnissen in einer Anlage einzusetzen. Eine Schräglage der Stange, die durch das Kippen entsteht, wird durch das Gelenk zwischen Stange und Ausleger wieder aufgehoben, so dass der Ausleger mit dem Kollimator in einer vorgegebenen Orientierung gegen den Prüfgegenstand positioniert werden kann. Der Winkel zwischen Stange und Ausleger wird beispielsweise von Hand eingestellt und fixiert, bevor der Ausleger hochgehoben, zum Prüfgegenstand geführt und mit der Führung gegen den Prüfgegenstand gelegt wird.

Die beschriebenen Vorrichtungen zur Positionierung des Kollimators und eines Aufzeichnungsträgers erlauben, mit einer kleinen Anzahl von Elementen, eine flexible Anpassung an eine Vielzahl von unterschiedlichen Gegebenheiten.

Das erste Positionierungsmittel ist grundsätzlich auch dazu geeignet, als **Prüfkopfhalter** Prüfköpfe mit anderen Messprinzipien zu positionieren. Solche sind beispielsweise Ultraschall- oder Wirbelstrom- oder Temperaturmessköpfe oder eine Kamera (Video oder Standbild) oder ein Endoskop. Damit können auch Messungen ohne das zweite Positionierungsmittel durchgeführt werden. In einer entsprechenden weiteren bevorzugten Ausführungsform der Erfindung, welche bei diesem Messprinzipien besonders geeignet ist, ist also das erste Positionierungsmittel zur Positionierung eines Prüfkopfes bezüglich eines Prüfgegenstandes ausgebildet. Dazu weist das erste Positionierungsmittel auf:
- eine Stange zur Positionierung des Prüfkopfes;
- eine mechanische Führung zur Zentrierung des Prüfkopfes bezüglich eines Prüfgegenstandes;
- eine verstellbare Anschlussvorrichtung, insbesondere eine Gelenkvorrichtung, welche die Stange an einem ersten Ende verstellbar und feststellbar mit dem Prüfkopf und der mechanischen Führung verbindet;
- wobei mittels der Anschlussvorrichtung eine Ausrichtung des Prüfkopfes mindestens zwischen einem Winkel senkrecht zur Richtung der Stange und einem Winkel parallel zur Stange und in Richtung des zweiten Endes der Stange verstellbar ist.

Damit wird es möglich, den Prüfkopf in beengten Verhältnissen um ein Hindernis herum an eine vorgegebene Stelle des Prüfgegenstandes heranzuführen. Die Vorrichtung ist durch Einstellen der Winkel zwischen Stange und Prüfkopf an die jeweils vorliegenden Hindernisse anpassbar.

Vorzugsweise weist die Gelenkvorrichtung zwei um jeweils mindestens 90° drehbare und arretierbare Gelenke auf, wobei die Drehachsen der 90° Gelenke parallel zueinander verlaufen. Damit ist eine sehr hohe Flexibilität der Verwendung mit einer einfachen und robusten Konstruktion möglich.

Vorzugsweise ist auch die mechanische Führung zur Zentrierung des Prüfkopfes um eine Längsachse der Führung, welche auf den Prüfgegenstand zeigt, drehbar verstellbar. Damit kann die Vorrichtung an unterschiedliche Orientierungen des Prüfgegenstandes angepasst werden.

Im **Verfahren** zur Verwendung der als Prüfkopfhalter ausgebildeten Vorrichtung werden die folgenden Schritte ausgeführt:
- Einstellen und Fixieren einer geplanten gegenseitigen Lage zwischen Prüfkopf und Stange durch Verstellen der Anschlussvorrichtung;
- Bewegen der Vorrichtung, vorzugsweise von Hand, bis die mechanische Führung in der gewünschten Position am Prüfgegenstand anliegt.
Das Bewegen der Vorrichtung geschieht vorzugsweise durch eine oder mehrere Personen, welche ein unteres Ende der Stange halten und bewegen und dadurch die am oberen Ende angeordnete Anschlussvorrichtung mit dem Prüfkopf in die gewünschte Messposition bewegen.

Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: einen Kollimatorhalter und einen Teil eines Plattenhalters;
- Figur 2: einen Plattenhalter;
- Figur 3: einen Filmhalter;
- Figur 4: eine Variante eines Filmhalters;
- Figur 5: den Einsatz einer erfindungsgemässen Vorrichtung;
- Figur 6 und 7: weitere Beispiele für den Einsatz der Erfindung;
- Figur 8: den Einsatz einer dritten Ausführungsform der Erfindung; und
- Figur 9: einen Halter für einen Prüfkopf.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

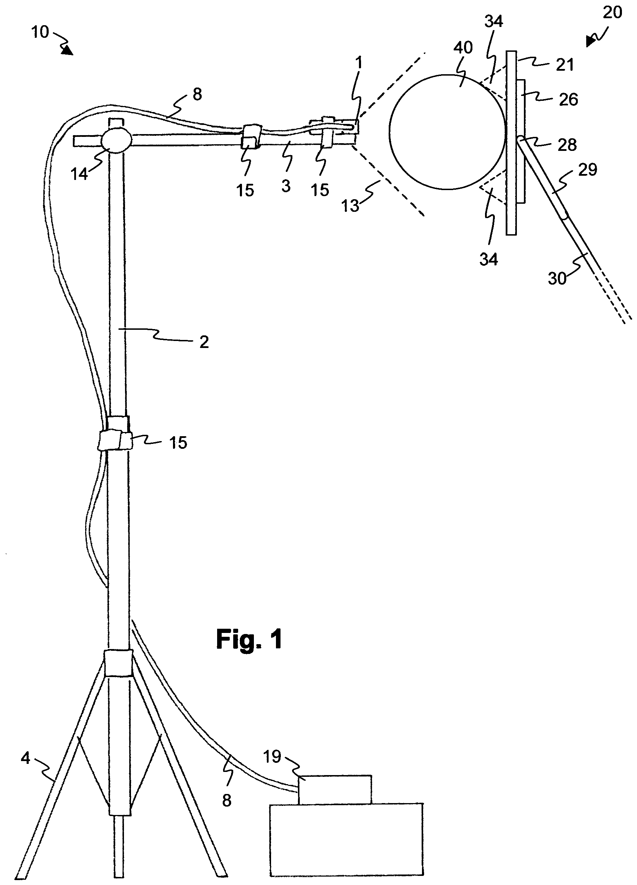

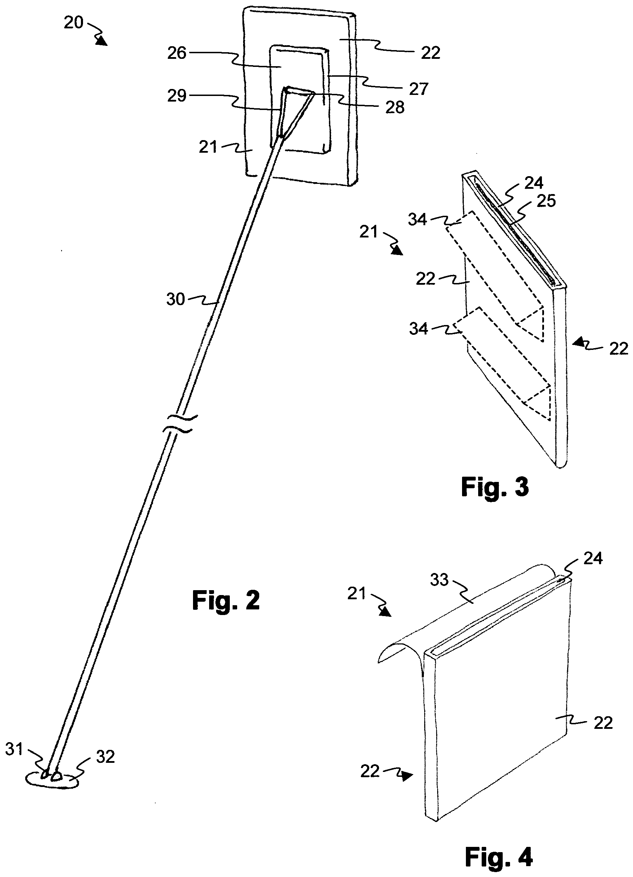

**Figuren 1** zeigt eine erste Ausführungsformen eines Kollimatorhalters 10. Der Kollimatorhalter 10 weist eine Stange 2 mit einer Länge von beispielsweise zwei bis sechs oder neun oder mehr Meter auf. Die Stange 2 ist vorzugsweise in der Länge verstellbar, und ist dazu vorzugsweise als Teleskopstange ausgebildet. Die Teleskopstange kann einfach manuell zusammensteckbar sein, oder aber manuell angetrieben, elektrisch, pneumatisch oder hydraulisch ausfahrbar sein. Am unteren Ende ist die Stange 2 in einem Stativ 4 montiert, kann aber auch mit einer anderen Art der Verankerung verbunden sein. Am oberen Ende ist die Stange 2 fest oder über ein verstellbares Gelenk 14 mit einem Ausleger 3 verbunden. Der Ausleger 3 weist eine Länge von bis zu 4 Metern auf trägt einen Kollimator 1. Der Kollimator 1 ist vorzugsweise mit Bändern 15, insbesondere Klettverschlussbändem am Ausleger 3 befestigt, oder aber mit beispielsweise Schraub- oder Klemmverbindungen. Der Ausleger ragt in einer anderen bevorzugten Ausführungsform der Erfindung an der dem Kollimator 1 gegenüberliegenden Seite über die Stange 2 heraus und ist mit einem Gegengewicht zum Kollimator 1 versehen. In einer weiteren Ausführungsform ist zwischen Stange 2 und Kollimator 1 ein weiteres Drehgelenk angeordnet. In einer bevorzugten Ausführungsform der Erfindung weist die Vorrichtung eine mechanische Führung 13 zur Zentrierung des Kollimators 1 bezüglich der Achse eines zu untersuchenden Rohres 40 auf. Diese ist in der **Figur 1** strichliert eingezeichnet. An der dem Kollimator 1 gegenüberliegenden Seite des Rohrs 40 ist der oberste Teil eines Plattenhalters 20 gezeichnet, der im Zusammenhang mit der **Figur 2** näher erklärt wird.

Eine Strahlungsquelle ist in bekannter Weise mit einem Seilzug durch einen Zuführschlauch 8 zum Kollimator 1 führbar. Der Zuführschlauch 8 kann abgeschirmt sein.

Um die Strahlungsquelle zum Kollimator 1 zu befördern, wird sie in an sich bekannter Weise mittels eines Kabelzuges aus einem abgeschirmten Isotopenbehälter durch einen Zuführschlauch 8 zum Kollimator 1 gestossen. Nach der Aufnahme wird die Strahlungsquelle wieder mittels des Kabelzuges zum Isotopenbehälter zurückgezogen. Das Ziehen des Kabels geschieht vorzugsweise manuell oder mit einem elektrischen oder sonstigen Antrieb.

Der Kollimatorhalter 10 wirkt also als ein erstes Positionierungsmittel. Er weist an einem ersten Ende einen Kollimator 1 auf und ist von einer Person durch Festhalten an einem zweiten Ende (welches dem Ersten Ende gegenüberliegt,) bewegbar, wobei durch diese Bewegung der Kollimator 1 in eine gewünschte Position bezüglich eines Prüfgegenstands 40 bringbar.

Analog wirkt der Plattenhalter 20 als zweites Positionierungsmittel. Er weist an einem ersten Ende einen Aufzeichnungsträger oder Filmhalter 21 auf und ist von einer Person durch Festhalten an einem zweiten Ende (welches dem ersten Ende gegenüberliegt,) frei bewegbar, wobei durch diese Bewegung der Aufzeichnungsträger 21 in eine gewünschte Position bezüglich des Prüfgegenstands 40 bringbar ist.

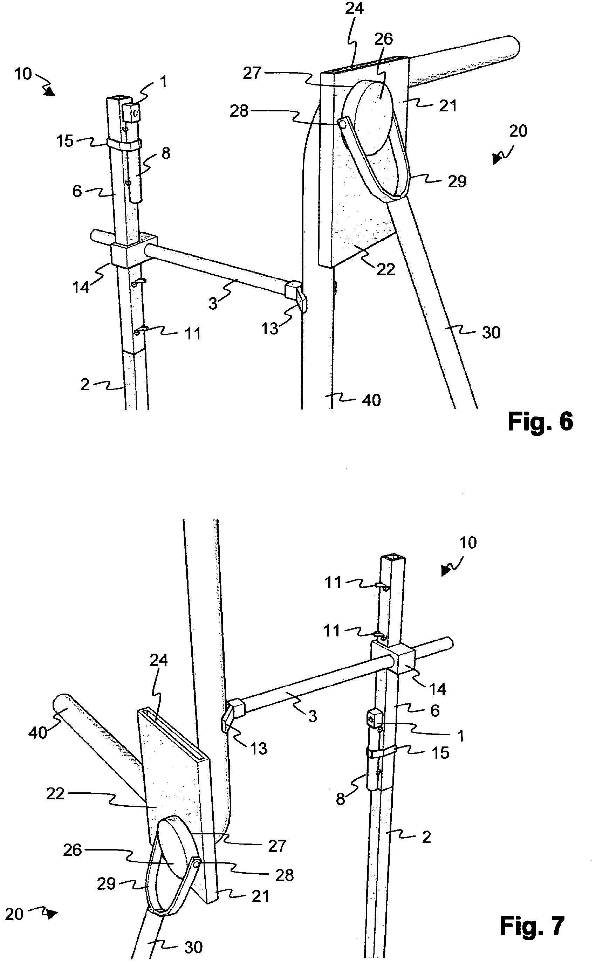

**Figur 2** zeigt einen Plattenhalter 20, aufweisend ein Halterohr 30, an dessen oberem Ende ein Filmhalter 21 befestigt ist. Am unteren Ende kann das Halterohr 30 zur besseren Positionierung mit einem Gelenk 31 an einer Fussplatte 32 befestigt sein. Das Halterohr ist vorzugsweise ein Teleskoprohr, wie in der Figur 6 ersichtlich ist. Vorzugsweise ist der Filmhalter 21 lösbar mit einer Verbindungsplatte 26 verbunden, und die Verbindungsplatte 26 wiederum über ein Drehgelenk 28 drehbar an einem Bügel 29 des Halterohrs 30. Die Drehachse des Drehgelenkes 28 zwischen Bügel 29 und Verbindungsplatte 26 verläuft im wesentlichen senkrecht zur Längsachse des Halterohr 30. Damit ist es möglich, den Filmhalter 21 gegen ein zu prüfendes Rohr 40 zu halten, wobei sich die Neigung des Filmhalters 21 unabhängig von der Neigung des Halterohrs 30 an die Position des Rohres 40 anpasst.

Die Verbindung zwischen Filmhalter 21 und Verbindungsplatte 26 geschieht vorzugsweise mittels einer Klettverbindung, beispielsweise mit einem ersten Klettverbindungsmaterial 22 (z.B. Flauschteil) am Filmhalter 21 und einem zweiten Klettverbindungsmaterial 27 (z.B. Hakenteil) an der Verbindungsplatte 26. Vorzugsweise ist dazu mindestens eine Seite des Filmhalters, besser beide Seiten, auf der ganzen Fläche mit dem Klettverbindungsmaterial 22 verkleidet. Vorzugsweise ist auch die äussere Seite der Verbindungsplatte 26 ganzflächig mit dem korrespondierenden Klettverbindungsmaterial 27 bedeckt. Die Klettverbindung ist somit stabil, schnell und einfach lösbar und weist keine metallischen Teile auf, die zu Funken führen können. Zudem wird der Filmhalter 21 durch das erste Klettverbindungsmaterial 22 gepolstert und dadurch eine allfällige Isolation des Rohres 40 vor Beschädigung geschützt. Das Material für die Klettverbindungen ist hier, wie auch bei den Befestigungsbändern 15, vorzugsweise aus antistatischem Material, so dass es in explosionsgefährdeten Umgebungen eingesetzt werden kann. Die ganzflächige Verkleidung mit Klettmaterial ermöglicht es, die Verbindungsplatte im wesentlichen an beliebiger Stelle auf dem Filmhalter zu positionieren.

**Figur 3** zeigt einen Filmhalter 21 als Aufzeichnungsträger. Der Filmhalter 21 weist einen Rahmen aus dünnem Aluminiumblech auf, in welchen eine Filmkassette 25 mit einem röntgenstrahlempfindlichen Film eingesetzt werden kann. In einer bevorzugten Ausführungsform der Erfindung weist der Filmhalter 21 Führungskörper 34 auf (In den **Figuren 1** und **3** strichliert eingezeichnet). Die Führungskörper 34 bestehen beispielsweise aus einem Hartschaumstoff, und sind mit Klettverbindungsmaterial versehen oder verkleidet. So sind die Führungskörper 34 in beliebiger Lage auf einer Fläche des Filmhalters 21 positionierbar, und können an den Verlauf eines Rohres angepasst werden. Beim Anlehnen des Filmhalters 21 gegen das Rohres wird so die Position des Filmhalter 21 zusätzlich stabilisiert.

Andere Ausführungsformen von Führungskörpern bestehen aus Aluminiumblechen, beispielsweise in einer Grösse von ca. 5 cm mal 20 cm. Die Aluminiumbleche sind vorzugsweise allseitig oder zumindest stellenweise mit Klettmaterial umwickelt. Sie können dadurch in eine beliebige gewünschte Form gebogen werden und an beliebiger Stelle des Filmhalters 21 fixiert werden.

**Figur 4** zeigt eine Variante eines Filmhalters 21. Dieser weist einen Haltebügel 33 auf, mit dem der Filmhalter 21 über ein Rohr 40 gehängt werden kann. Dadurch ergibt sich eine bessere Stabilisierung der Position des Filmhalters 21 während der Belichtung. Die Funktion des Bügels kann auch mittels der genannten Führungskörper aus umwickelten Aluminiumblechen realisiert werden.

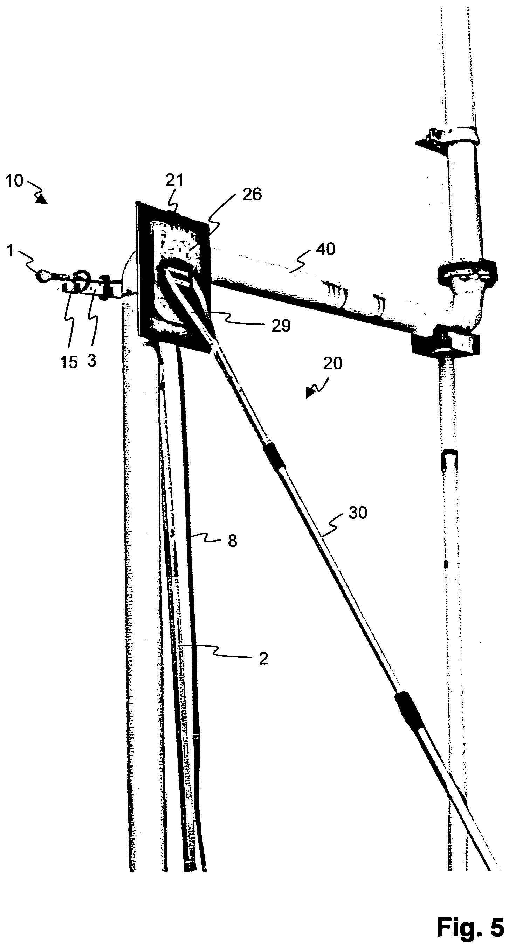

**Figur 5** zeigt den Einsatz der ersten Ausführungsform der erfindungsgemässen Vorrichtung: Der Kollimatorhalter 10 ist mit dem Kollimator 1 am Ende des Auslegers 3 auf der einen Seite eines Rohres 40 angeordnet, der Plattenhalter 20 mit dem Filmhalter 21 auf der gegenüberliegenden Seite. Der Plattenhalter 20 ruht (nicht eingezeichnet) mit dem unteren Ende am Boden und lehnt gegen das Rohr 40, ist also als Ganzes zwischen Boden und Rohr 40 eingeklemmt oder zumindest durch sein Eigengewicht fixiert.

Der Filmhalter 21 ist um eine Drehachse bezüglich des Halterohres drehbar und, durch Drücken des Filmhalters 21 gegen den Prüfgegenstand 40 und durch freie Drehung des Filmhalters 21 um die Drehachse des Gelenks 28 entsprechend der Stelle, an welcher das Halterohr 30 respektive die Verbindungsplatte 26 am Filmhalter 21 befestigt ist, in eine stabile Lage - also ohne zu Verkippen - bezüglich des Prüfgegenstands 40 bringbar.

Zur Aufnahme eines Röntgenbildes eines Rohres 40 wird vorzugsweise wie folgt vorgegangen:
- Aufstellen des Kollimatorhalters 10 mit Kollimator 1 und Zuführschlauch 8.
- Aufstellen oder Anlehnen des Plattenhalters 20 mit dem Filmhalter 21.
- Wenn erforderlich, Einhalten eines Sicherheitsabstandes durch die Bediener.
- Befördern der Strahlungsquelle aus dem Isotopenbehälter 9 in den Kollimator 1 oder aktivieren der Strahlungsquelle im Kollimator 1 auf eine andere Art.
- Zurückbefördern der Strahlungsquelle zum Isotopenbehälter 9 respektive deaktivieren der Strahlungsquelle.
Anschliessend wird der Plattenhalter 20 heruntergenommen und das Röntgenbild entwickelt. Entsprechend dem Ergebnis kann beispielsweise die Aufnahme wiederholt werden, oder der Kollimatorhalter 10 zur nächsten Aufnahme verschoben werden.

**Figur 6** und **7** zeigen weitere Beispiele für den Einsatz der Erfindung. Es wird darin sichtbar, wie die Führung 13 vorzugsweise über einen Ausleger 3 an der Stange 2 befestigt ist, und der Kollimator 1 wiederum an der Stange 2 respektive einem Endstück 6 der Stange 2. Der Zuführschlauch 8 ist in den **Figuren 6** bis **8** nur ansatzweise in der Nähe des Kollimators 1 gezeichnet. Die Führung 13 und der Ausleger 3 geben die Distanz zwischen Kollimator 1 und Prüfgegenstand vor. Je nach der Lage des zu untersuchenden Abschnittes des Rohres 40 ist die Ausfahrlänge des Auslegers 3, die Position des verstellbaren Gelenks 14 und die Position des Kollimators 1 entlang der Stange 2 respektive des Endstücks 6 zu wählen. Entsprechend ist auch die Position der Verbindungsplatte 26 auf dem Filmhalter 21 gewählt. Die Verbindungsplatte 26 ist hier rund, im Gegensatz zur viereckigen Verbindungsplatte der **Figuren 2** und **5****.** Die Verbindung zum Filmhalter 21 geschieht aber auch hier vorzugsweise durch eine Klettverbindung mit der ganzflächig mit Klettverbindungsmaterial 22 bedeckten Fläche des Filmhalters 21. In der **Figur 6** ist die Verbindungsplatte 26 in einem linken oberen Bereich des Filmhalters 21 positioniert, so dass der Andruckpunkt des Filmhalters 21 am Rohrbogen zu einer stabilen Lage des Filmhalters 21 führt. In der **Figur 7** hingegen ist die Verbindungsplatte 26 in einem rechten unteren Bereich des Filmhalters 21 positioniert. Bei Aufnahmen an einer T-Verbindung von Rohren würde die Verbindungsplatte 26 eher in der Mitte des Filmhalters 21 angeordnet.

Zur sicheren Befestigung des Kollimators 1 am Endstück 6 weist dieses vorzugsweise Befestigungshilfen 11 auf. Die Befestigungshilfen 11 sind der Form des Kollimators 1 entsprechen geformt und bilden eine oder mehrere Halterungen, in welcher der Kollimator 1 in verschiedenen Positionen werkzeugfrei montiert und demontiert werden kann, beispielsweise mit Hilfe von Klettverschlussbändern 15.

Das verstellbare Gelenk 14 erlaubt vorzugsweise auch, die Führung 13 um die Längsachse des Auslegers 3 drehen. Dadurch ist die Orientierung der Führung 13 an z.B. eine Richtung eines Rohres anpassbar (horizontal, vertikal oder schräg).

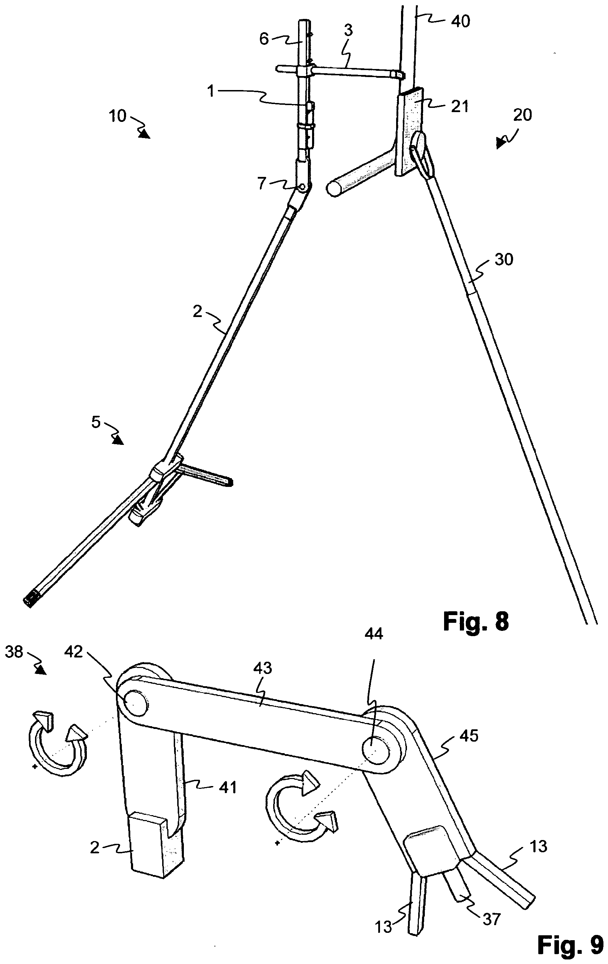

**Figur 8** zeigt den Einsatz einer dritten Ausführungsform der Erfindung. Ein Endstück 6 der Stange 2 ist mittels eines Drehgelenkes 7 drehbar an einem ersten, oberen Ende der Stange 2 befestigt. Die Drehachse des Gelenkes 7 verläuft senkrecht zur Längsachse der Stange 2. An einem zweiten, unteren Ende der Stange 2 ist ein Zweibeinstativ 5 angeordnet. Dadurch ist dieser Kollimatorhalter 10 als Ganzes um die Auflagepunkte des Zweibeinstativ 5 kippbar. In einer anderen Ausführungsform der Erfindung ist die Stange 2 mittels eines Drehgelenkes ebenfalls um eine Achse senkrecht zur Längsachse der Stange 2 kippbar an einem nicht kippbaren Fuss befestigt. Dadurch kann in beengten Verhältnissen die Stange 2 mit dem Kollimator 1 um ein (nicht gezeichnetes) Hindernis herum an das Rohr 40 heran geführt und mit der Führung 13 an das Rohr 40 angelehnt werden. Grundsätzlich kann auch mehr als ein Drehgelenk 7 zwischen Stange 2 und Endstück 6 angeordnet sein, um eine erhöhte Flexibilität zu erreichen.

**Figur 9** zeigt einen Halter für einen Prüfkopf 37. Der Halter ist eine Anschlussvorrichtung 38, welche am oberen Ende einer Stange 2 (beispielsweise eines Stativs) befestigbar ist. Die Anschlussvorrichtung weist ein erstes Glied 41 auf, an welchem über ein Drehgelenk 42 ein zweites Glied 43 drehbar befestigt ist. Am zweiten Glied 43 wiederum ist über ein Drehgelenk 44 ein drittes Glied 45 drehbar befestigt. Am dritten Glied 45 ist der Prüfkopf 37 befestigt und vorzugsweise auch eine Führung 13 zur Ausrichtung des Prüfkopfs 37 an einem zu untersuchenden Körper. Die beiden Drehgelenke 42, 44 sind um zueinander parallele Achsen um jeweils 90° bis 180° oder noch weister drehbar, wie durch zwei Pfeile angedeutet, und. Die Gelenke 42, 44 sind feststellbar, und können auch durch feststellbare Kugelgelenke realisiert werden.

Mittels der Anschlussvorrichtung 38 ist eine Ausrichtung des Prüfkopfes 37 mindestens zwischen einem Winkel senkrecht zur Richtung der Stange 2 und einem Winkel parallel zur Stange 2 und in Richtung des unteren Endes der Stange 2 verstellbar. Die Anschlussvorrichtung 38 erlaubt es den Prüfkopf 37 von einer beliebigen Seite her gegen z.B. ein Rohr 40 zu führen und zu zentrieren.

**BEZUGSZEICHENLISTE**

| | | | |
|---|---|---|---|
| 1 | Kollimator | 22 | Klettverbindungsmaterial |
| 2 | Stange | 24 | Schlitz |
| 3 | Ausleger | 25 | Filmkassette |
| 4 | Stativ | 26 | Verbindungsplatte |
| 5 | Zweibeinstativ | 27 | Klettverbindungsmaterial |
| 6 | Endstück | 28 | Drehgelenk |
| 7 | Drehgelenk | 29 | Bügel |
| 8 | Zuführschlauch | 30 | Halterohr |
| 9 | Isotopenbehälter | 31 | Gelenk |
| 10 | Kollimatorhalter | 32 | Fussplatte |
| 11 | Befestigungshilfe | 33 | Haltebügel |
| 13 | Führung | 34 | Führungskörper |
| 14 | verstellbares Gelenk | 35 | Gelenkfuss |
| 15 | Klettverschlussband | 37 | Prüfkopf |
| 18 | Öffnung in der Abschirmung | 38 | Anschlussvorrichtung |
| | | 39 | Längsachse der Führung |
| 19 | Seilzugvorrichtung und Isotopenbehälter | 40 | Rohr |
| | | 41, 43, 45 | Glieder |
| 20 | Plattenhalter | 42, 44 | Gelenke |
| 21 | Filmhalter | | |

## Patentansprüche

1. Vorrichtung zur radiographischen zerstörungsfreien Prüfung von Gegenständen, aufweisend ein erstes Positionierungsmittel (10) mit einem Kollimator (1) mit einer radioaktiven Strahlungsquelle (5), zur Positionierung des Kollimators (1) bei einem Prüfgegenstand (40), und ein zweites Positionierungsmittel (20) mit einem Aufzeichnungsträger (21), zur Positionierung des Aufzeichnungsträgers (21) beim Prüfgegenstand (40), wobei das erste Positionierungsmittel (10) mit einem unteren Ende auf einer Auflagefläche verankerbar oder aufstellbar ist und der Kollimator (1) am gegenüberliegenden, oberen Ende angebracht ist, wobei das zweite Positionierungsmittel (20) ein Halterohr (30) zur Positionierung des Aufzeichnungsträgers (21) bezüglich des Prüfgegenstands (40) aufweist, **dadurch gekennzeichnet, dass** eine Filmkassette (25) in den Aufzeichnungsträger (21) eingesetzt werden kann, das zweite Positionierungsmittel (20) alternativ an verschiedenen Stellen des Aufzeichnungsträgers (21) durch eine lösbare Verbindung befestigbar ist, und
wobei der Aufzeichnungsträger (21) bezüglich des Halterohrs (30) des zweiten Positionierungsmittels (20) um eine Achse (28) senkrecht zur Achse des Halterohrs (30) drehbar ist.

2. Vorrichtung gemäss Anspruch 1, wobei die Teile aus nicht funkenerzeugenden Materialien gefertigt sind, insbesondere aus Messing, Aluminium und/oder Kunststoff.

3. Vorrichtung gemäss einem der bisherigen Ansprüche, wobei das erste Positionierungsmittel (10) vom zweiten Positionierungsmittel (20) getrennt bewegbar und unabhängig positionierbar ist, und die Länge des ersten Positionierungsmittels (10) und des zweiten Positionierungsmittels (20) mehr als zwei Meter beträgt.

4. Vorrichtung gemäss Anspruch 3, wobei die Länge des ersten Positionierungsmittels (10) und des zweiten Positionierungsmittels (20) mehr als sechs Meter beträgt.

5. Vorrichtung gemäss Anspruch 1, wobei der Aufzeichnungsträger (21) durch eine Klettverbindung an einer Verbindungsplatte (26) des zweiten Positionierungsmittels (20) befestigt ist.

6. Vorrichtung gemäss einem der bisherigen Ansprüche, aufweisend Führungskörper (34) zum Abstützen und Führen des Aufzeichnungsträgers (21) an einem Prüfgegenstand (40), wobei die Führungskörper (34) verstellbar an der dem Halterohr (30) abgewandten Seite des Aufzeichnungsträgers (21) befestigbar sind.

7. Vorrichtung gemäss Anspruch 6, wobei die Führungskörper (34) durch Klettverbindungen verstellbar am Aufzeichnungsträger (21) befestigbar sind.

8. Vorrichtung gemäss einem der bisherigen Ansprüche, wobei das **erste Positionierungsmittel** (10) eine mechanische Führung (13) zur Zentrierung des Kollimators (1) bezüglich eines Prüfgegenstandes (40), indem die mechanische Führung gegen den Prüfgegenstand gedrückt wird, aufweist.

9. Vorrichtung gemäss Anspruch 8, wobei die mechanische Führung (13) eine Distanzierung des Kollimators (1) vom Prüfgegenstand (40) bewirkt und die Distanz zwischen dem Prüfgegenstand (40) und dem Kollimator (1) durch Verstellen der mechanischen Führung (13) einstellbar ist.

10. Vorrichtung gemäss Anspruch 8 oder 9, wobei der Kollimator (1) und die mechanische Führung (13) an einer Stange (2) befestigt sind und der Kollimator (1) wahlweise über oder unter der mechanischen Führung (13) befestigbar ist.

11. Vorrichtung gemäss einem der bisherigen Ansprüche, wobei das erste Positionierungsmittel (10) eine Stange (2) aufweist, welche kippbar aufstellbar ist, und das erste Positionierungsmittel (10) ferner ein verstellbares Gelenk (14) zwischen der Stange (2) und einem Ausleger (3) aufweist, wodurch eine am Ausleger (3) befestigte mechanische Führung (13) in einem wählbaren Winkel gegen einen Prüfgegenstand (40) bewegbar und an den Prüfgegenstand (40) anlehnbar ist.

12. Vorrichtung gemäss Anspruch 11, wobei die Stange (2) um eine Achse drehbar an einem Gelenkfuss (35) befestigt ist oder an einem Zweibeinstativ (36) befestigt ist.

13. **Verfahren** zum Erstellen einer radiographischen Aufnahme mit einer Vorrichtung gemäss mindestens einem der Ansprüche 1 bis 12, aufweisend die folgenden Schritte:
• Aufstellen des ersten Positionierungsmittels (10) mit dem Kollimator (1) an einer Seite des Prüfgegenstands (40);
• Positionieren der Verbindungsplatte (26) des zweiten Positionierungsmittels (20) auf dem Aufzeichnungsträger (21) in einer frei auf einer ersten Fläche des Aufzeichnungsträgers (21) wählbaren Lage, und Fixieren der Verbindungsplatte (26) durch eine lösbare Verbindung;
• Aufstellen des zweiten Positionierungsmittels (20) mit dem Aufzeichnungsträger (21) an einer dem Kollimator (1) gegenüberliegenden Seite des Prüfgegenstands (40);
• Bewegen und Anlehnen des Aufzeichnungsträgers (21) gegen den Prüfgegenstand (40); und
• Auslösen einer Aufzeichnung.

14. Verfahren gemäss Anspruch 13, wobei der Schritt des Aufstellens des **ersten** Positionierungsmittels (10) die folgenden Schritte aufweist:
• Einstellen und Fixieren eines geplanten Abstands zwischen Kollimator (1) und Prüfgegenstand (40) durch Verstellen der mechanischen Führung (13), optional auch durch Wahl der Positionierung des Kollimators (1) am ersten Positionierungsmittel (10);
• Bewegen des ersten Positionierungsmittels (10) bis die mechanische Führung (13) in der gewünschten Position am Prüfgegenstand (40) anliegt.

15. Verfahren gemäss Anspruch 14, wobei das Bewegen des ersten Positionierungsmittels (10) von Hand geschieht.

16. Verfahren gemäss Anspruch 13 oder 14 oder 15, wobei der Schritt des Aufstellens des **zweiten** Positionierungsmittels (20) die folgenden Schritte aufweist:
• Positionieren von Führungskörpern (34) auf einer zweiten Fläche des Aufzeichnungsträgers (21);
• wobei beim Bewegen und Anlehnen des Aufzeichnungsträgers (21) gegen den Prüfgegenstand (40) eine Führung dadurch bewirkt wird, dass die Führungskörper (34) am Prüfgegenstand (40) anliegen.

## Claims

1. A device for the radiographic, non-destructive testing of objects, comprising a first positioning means (10) for positioning a collimator (1) for receiving a radioactive radiation source (5), at an object to be tested (40), and a second positioning means (20) for positioning a recording carrier (21) at the object to be tested (40), wherein the first positioning means (10) can be anchored or set up with a lower end on a rest surface, and the collimator (1) is attached on the opposite, upper end, wherein the second positioning means (20) comprises a holding tube (30) for positioning the recording carrier (21) with respect to the object (40) to be tested, **characterised in that** a film cassette (25) can be placed in the recording carrier (21), and the second positioning means (20) is alternatively fastenable at different locations on a surface of the recording carrier (21) by way of a releasable connection; and
wherein the recording carrier (21) is rotatable about an axis (28) perpendicular to the axis of the holding tube (30), with respect to the holding tube (30) of the second positioning means (20).

2. Device according to claim 1, wherein the parts are manufactured of material which does not produce sparks, in particular of brass, aluminium and/or plastic.

3. Device according to one of the preceding claims, wherein the first positioning means (10) can be moved separately from the second positioning means (20) and can be positioned independently of the second positioning means (20), and the length of the first positioning means (10) and of the second positioning means (20) is more than two metres;

4. Device according to claim 3, wherein the length of the first positioning means (10) and of the second positioning means (20) is more than six metres.

5. Device according to claim 1, wherein the recording carrier (21) is fastened on a connection plate (26) of the second positioning means (20) by way of a Velcro connection.

6. Device according to one of the preceding claims, comprising guide bodies (34) for supporting and guiding the recording carrier (21) on an object (40) to be tested, wherein the guide bodies (34) are adjustably fastenable on the side of the recording carrier (21), said side being distant to a holding tube (30).

7. Device according to claim 6, wherein the guide bodies (34) are fastenable in an adjustable manner on the recording carrier (21) by way of Velcro connections.

8. Device according to one of the preceding claims, wherein the **first positioning means** (1) comprises a mechanical guide (13) for centring the collimator (1) with respect to an object (40) to be tested, by way of the mechanical guide being pressed against the object to be tested.

9. Device according to claim 8, wherein the mechanical guide (13) effects a distancing of the collimator (1) from the object (40) to be tested, and the distance between the object to be tested (40) and the collimator (1) may be set by way of adjusting the mechanical guide (13).

10. Device according to claim 8 or 9 wherein the collimator (1) and the mechanical guide (13) are fastened on a rod (2), and the collimator (1) may be selectively fastened above or below the mechanical guide (13).

11. Device according to one of the preceding claims, wherein the first positioning means (10) comprises a rod (2) which may be set up in a tiltable manner, and the first positioning means (10) further comprises an adjustable joint (14) between the rod (2) and an extension arm (3), by which means a mechanical guide (13) fastened on the extension arm (3) may be moved in a selectable angle against an object (40) to be tested, and leaned on the object (40) to be tested.

12. Device according to claim 11, wherein the rod (2) is fastened on a joint foot (35) in a rotatable manner about an axis, or is fastened on a bipod stand (36).

13. A **method** for creating a radiographic recording with a device according to at least one of the claims 1 to 12, comprising the following steps:
• setting up the first positioning means (10) with the collimator (1) on one side of the object (40) to be tested;
• positioning the connection plate (26) of the second positioning means (20) on the recording carrier (21) in a freely selectable position on a first surface of the recording carrier (21), and fixing the connection plate (26) by way of a releasable connection;
• setting up the second positioning means (20) with the recording carrier (21) on a side of the object (40) to be tested, said side lying opposite the collimator (1);
• moving and leaning the recording carrier (21) against the object (40) to be tested; and
• triggering a recording.

14. Method according to claim 13, wherein the step of setting up the **first** positioning means (10) has the following steps:
• setting and fixing a planned distance between the collimator (1) and the object (40) to be tested, by way of setting the mechanical guide (13), optionally also by way of the selection of the positioning of the collimator (1) on the first positioning means (10);
• moving the first positioning means (10) until the mechanical guide (13) bears on the object (40) to be tested, in the desired position.

15. Method according to claim 14, wherein the moving of the first positioning means (10) is done manually.

16. Method according to claim 13 or 14 or 15, wherein the step of setting up the **second** positioning means (20) comprises the following steps:
• positioning guide bodies (34) on a second surface of the recording carrier (21)
• when moving and leaning the recording carrier (21) against the object (40) to be tested, the recording carrier being guided by the guide bodies (34) bearing on the object (40) to be tested.

## Revendications

1. Ensemble de vérification non destructrice d'objets par radiographie, l'ensemble présentant
un premier moyen de positionnement (10) doté d'un collimateur (1) présentant une source (5) de rayonnement radioactif, et permettant le positionnement du collimateur (1) sur un objet (40) à tester, et un deuxième moyen de positionnement (20) doté d'un support d'enregistrement (21), permettant le positionnement du support d'enregistrement (21) sur l'objet (40) à tester,
le premier moyen de positionnement (10) pouvant être ancré ou placé par une extrémité sur une surface d'appui et le collimateur (1) étant installé à l'extrémité supérieure opposée,
le deuxième moyen de positionnement (20) présentant un tube de maintien (30) qui positionne le support d'enregistrement (21) par rapport à l'objet (40) à tester,
**caractérisé en ce que**
une cassette de film (25) peut être insérée dans le support d'enregistrement (21),
**en ce que** le deuxième moyen de positionnement (20) peut être fixé alternativement en différents emplacements du support d'enregistrement (21) par une liaison libérable et
**en ce que** le support d'enregistrement (21) peut tourner par rapport au tube de maintien (30) du deuxième moyen de positionnement (20) autour d'un axe (28) perpendiculaire à l'axe du tube de maintien (30).

2. Ensemble selon la revendication 1, dont les pièces sont réalisées en un matériau ne formant pas d'étincelle, en particulier en laiton, en aluminium et/ou en matière synthétique.

3. Ensemble selon l'une des revendications précédentes, dans lequel le premier moyen de positionnement (10) peut être déplacé séparément du deuxième moyen de positionnement (20) et peut être positionné de manière indépendante, la longueur du premier moyen de positionnement (10) et celle du deuxième moyen de positionnement (20) étant supérieures à deux mètres.

4. Ensemble selon la revendication 3, dans lequel la longueur du premier moyen de positionnement (10) et celle du deuxième moyen de positionnement (20) sont supérieures à six mètres.

5. Ensemble selon la revendication 1, dans lequel le support d'enregistrement (21) peut être fixé par une liaison de type velcro sur une plaque de liaison (26) du deuxième moyen de positionnement (20).

6. Ensemble selon l'une des revendications précédentes, présentant des corps de guidage (34) qui soutiennent et guident le support d'enregistrement (21) sur un objet (40) à tester, les corps de guidage (34) pouvant être fixés de manière ajustable sur le côté du support d'enregistrement (21) non tourné vers le tube de maintien (30).

7. Ensemble selon la revendication 6, dans lequel les corps de guidage (34) peuvent être fixés de manière ajustable sur le support d'enregistrement (21) par des liaisons de type Velcro.

8. Ensemble selon l'une des revendications précédentes, dans lequel le premier moyen de positionnement (10) présente un guide mécanique (13) qui centre le collimateur (1) par rapport à un objet (40) à tester en repoussant le guide mécanique contre l'objet à tester.

9. Ensemble selon la revendication 8, dans lequel le guide mécanique (13) a pour effet le maintien du collimateur (1) à distance de l'objet (40) à tester, la distance entre l'objet (40) à tester et le collimateur (1) pouvant être ajustée par déplacement du guide mécanique (13) .

10. Ensemble selon les revendications 8 ou 9, dans lequel le collimateur (1) et le guide mécanique (13) sont fixés sur une tringle (2) et le collimateur (1) peut être fixé sélectivement au-dessus ou en dessous du guide mécanique (13).

11. Ensemble selon l'une des revendications précédentes, dans lequel le premier moyen de positionnement (10) présente une tringle (2) qui peut être ajustée par basculement, le premier moyen de positionnement (10) présentant en outre une articulation réglable (14) entre la tringle (2) et un bras (3), grâce à quoi un guide mécanique (13) fixé sur le bras (3) peut être déplacé suivant un angle sélectionné en direction d'un objet (40) à tester et être appuyé sur l'objet (40) à tester.

12. Ensemble selon la revendication 11, dans lequel la tringle (2) est fixée sur un pied articulé (35) à rotation autour d'un axe ou est fixée sur un statif (36) à deux pieds.

13. Procédé d'établissement d'un enregistrement radiographique à l'aide d'un ensemble selon au moins l'une des revendications 1 à 12, le procédé présentant les étapes suivantes :
placement du premier moyen de positionnement (10) avec le collimateur (1) sur un côté de l'objet (40) à tester,
positionnement de la plaque de liaison (26) du deuxième moyen de positionnement (20) sur un support d'enregistrement (21) en une position sélectionnée librement sur une première surface du support d'enregistrement (21) et fixation de la plaque de liaison (26) par une liaison libérable,
placement du deuxième moyen de positionnement (20) avec le support d'enregistrement (21) sur un côté de l'objet (40) à tester opposé au collimateur (1),
déplacement et application du support d'enregistrement (21) contre l'objet (40) à tester et
déclenchement d'un enregistrement.

14. Procédé selon la revendication 13, dans lequel l'étape de placement du premier moyen de positionnement (10) présente les étapes suivantes :
ajustement et fixation d'une distance programmée entre le collimateur (1) et l'objet (40) à tester par ajustement du guide mécanique (13), facultativement également par sélection du positionnement du collimateur (1) sur le premier moyen de positionnement (10) et
déplacement du premier moyen de positionnement (10) jusqu'à ce que le guide mécanique (13) vienne se placer contre l'objet (40) à tester dans la position souhaitée.

15. Procédé selon la revendication 14, dans lequel le déplacement du premier moyen de positionnement (10) s'effectue à la main.

16. Procédé selon les revendications 13, 14 ou 15, dans lequel l'étape de placement du deuxième moyen de positionnement (20) présente les étapes suivantes :
placement de corps de guidage (34) sur une deuxième surface du support d'enregistrement (21) et
guidage lors du déplacement et de l'application du support d'enregistrement (21) contre l'objet (40) à tester, réalisé grâce au fait que les corps de guidage (34) reposent sur l'objet (40) à tester.
